(19) Europäisches Patentamt

European Patent Office

Office européen des brevets

(11) **EP 0 663 257 B1**

(12) **EUROPEAN PATENT SPECIFICATION**

(45) Date of publication and mention
of the grant of the patent:
**05.08.1998 Bulletin 1998/32**

(51) Int. Cl.$^6$: **B23H 7/04**, B23H 7/20

(21) Application number: **95300235.9**

(22) Date of filing: **13.01.1995**

(54) **Monitor apparatus in an electric discharge machine**

Überwachungsvorrichtung für Funkenerosionsmaschine

Appareil de surveillance pour machine d'usinage par électroérosion

(84) Designated Contracting States:
**CH DE LI**

(30) Priority: **13.01.1994 JP 15788/94**

(43) Date of publication of application:
**19.07.1995 Bulletin 1995/29**

(73) Proprietor: **FANUC LTD.**
**Minamitsuru-gun, Yamanashi 401-05 (JP)**

(72) Inventors:
• **Uchiyama, Tatsuhiro,**
**Mainsville, Ohio 45039 (US)**
• **Neko, Noriaki,**
**Room 11-607, Fanuc Manshonhari.,**
**Yamanashi, 401-05 (JP)**

(74) Representative:
**Billington, Lawrence Emlyn**
**Haseltine Lake & Co.,**
**Imperial House,**
**15-19 Kingsway**
**London WC2B 6UD (GB)**

(56) References cited:
**EP-A- 0 442 059**

• **PATENT ABSTRACTS OF JAPAN vol. 016 no. 258**
**(M-1264) ,11 June 1992 & JP-A-04 063624**
**(FANUC LTD) 28 February 1992,**

## Description

The present invention relates to an electric discharge apparatus and, more particularly, to a monitor apparatus for monitoring a process, or a sequence of processes, in electric discharge machining of the electric discharge apparatus.

Electric discharge machines have been developed for machining a workpiece by means of electric spark between an electrode tool and the workpiece. For example, a wire-cut electric discharge machine, which is one kind of electric discharge machine , employs an electrode wire (referred to as a wire hereinafter) which while running under tension, produces an electric discharge against a workpiece for machining. The wire travels from a supply reel via the workpiece to a wire take-up unit, being driven by a wire feeder mechanism which comprises brake rollers and feed rollers disposed across the path of the wire. During running, the wire is properly tensioned by applying a braking force of the brake rollers to resist a driving force of the feed rollers.

In general, a monitor apparatus is provided in such a wire-cut electric discharge machine for measuring and monitoring an actual discharge voltage impressed between the electrode and the workpiece at each sparking during the machining, an actual machining speed which is a running speed of the electrode relative to the workpiece, and a fault discharge rate which is a rate of fault discharges to the total number of electric discharges.

The disadvantage of such a conventional monitor apparatus in a known electric discharge machine is that any monitored value represents a measurement at a point of time during the machining, and a change with time in the monitored measurement can be observed only with difficulty. More particularly, the conventional monitor apparatus in the electric discharge machine is incapable of detecting a change in the monitored measurement of a machining characteristic during the machining and thus fails to indicate an alteration of state in the electric discharge machining.

There is disclosed in EP-A-0442059 a monitor apparatus in combination with an electric discharge machine and comprising: a memory means adapted for storing, at each one of given times, a monitored measurement of working data which is indicative of a present state of electric discharge machining; a display means adapted for displaying the present state of electric discharge machining by means of a monitored measurement retrieved from the memory means; and a converting means adapted for converting monitored measurements into visual representations for display on the display means, the display means being operable to display visual representations of different types of said monitored measurements.

It is an object of the present invention, for reducing the foregoing disadvantage of the conventional monitor apparatus in the electric discharge machine, to provide a monitor apparatus for monitoring a change in a monitored measurement which is indicative of a present state of electric discharge machining in the electric discharge machine.

A monitor apparatus/electric discharge machine combination according to the present invention is adapted to provide the following displays of visual representations of monitored measurement: (a) monitored measurements of working data at their corresponding locations on a machining path, the display providing a three-dimensional representation; (b) monitored measurements of different types in a machining process, whereby the relation between the different types of working data in the machining process is visualized; and (c) monitored measurements of working data at different shapes of machining path as a machining process progresses, whereby the variation of working data at said different shapes is visualized.

The monitored measurements may be various data indicative of present conditions of the electric discharge machining including for example a machining location, an actual machining speed, a discharge voltage, an off-time and an on-time of a voltage applied to a wire, a machining mode, the total number of discharges, the number of fault discharges, a rate of fault discharge, and a discharge power.

In particular, the memory means for storing the monitored measurement sampled at each given time such as a sampling time may be capable of holding a plurality of monitored measurements sampled in one or more processes of the electric discharge machining. The memory means may be a RAM provided inside or outside the electric discharge machine.

The display means may be capable of displaying at one time a plurality of monitored measurements sampled in more than one of the processes of the electric discharge machining upon reading from the memory means. The display means may also display the monitored measurements of different types in one single process and of one or more types in different processes. For the purpose of comparison, one of the different processes of the electric discharge machining may be designated in which a non-defective product is obtained.

The converting means is capable of converting the monitored measurement into a visual representation for display on a display device. For example, the converting means may convert the monitored measurements into coordinate system data used in the display means, may compare the monitored measurements in one process of the electric discharge machining with those in another of the same, or may judge the result of the electric discharge machining by selectively determining adjacent sampling locations in the processes of the electric discharge machining and comparing the monitored measurements at their respective sampling locations.

In an embodiment of electric discharge machine according to the present invention, a series of monitored measurements indicative of present conditions of the electric discharge machining may be sampled at corresponding points of time such as sampling times during each step of the procedure,and stored in the memory means where the sampling time serves as an address information for data acquisition. When required for display on the display means, the monitored measurements of one specific type which form a group of data sampled in one or more processes of the electric discharge machining may be retrieved from the memory means. The monitored measurements may then be converted by the converting means into such appropriate forms that their visual representations are displayed as the present machining conditions on the display means according to their respective sampling times.

For display, the converting means converts the monitored measurements retrieved from the memory means into corresponding visual representations. For example, the monitored measurements may be converted into coordinate system data and displayed in the form of a coordinate representation on a screen of the display means. They may be compared between different processes to monitor any change. They may be used for judgment of a target workpiece. For the judgment, it is examined whether or not sampling locations on the target workpiece are adjacent to corresponding sampling locations on a reference workpiece which has been predetermined, prior to comparison of the monitored measurements of the target workpiece with those of the reference workpiece.

An embodiment of the present invention may include calculating a departure of a sampling location along the present machining route from the reference sampling location along the recorded machining route to determine whether the sampling location is eligible or not , comparing the monitored measurement of any eligible sampling location within a limitation with that of the reference sampling location, and giving no judgment if the number of not-eligible sampling locations is large so that the judgment is increased in accuracy.

As set forth above, a monitor apparatus in an electric discharge machine of the present invention allows a change in the monitored measurement indicative of a present state of the electric discharge machining to be observed.

To provide a better demonstration of the characteristics, hereafter, as examples without any restrictive character, some preferred embodiments are described referring to accompanying drawings, wherein;

Fig. 1 is a block diagram of a wire-cut electric discharge machine showing one preferred embodiment of the present invention;
Fig. 2 is a table of monitored data attributed to the electric discharge machine of Fig. 1;
Fig. 3 is a waveform diagram showing a supply voltage in the electric discharge machine;

Fig. 4 is a flow chart for acquisition of the monitored data according to an example of the present invention;
Fig. 5 is a flow chart for displaying a distribution of measurements of actual machining speed at corresponding machining locations according to the present invention in the form of one embodiment thereof;
Fig. 6 is a flow chart for displaying the relation between discharge voltage and actual machining speed according to an example of the present invention;
Fig. 7 is a flow chart for displaying the relation of the discharge voltage and actual machining speed to a machining time according to an example of the present invention;
Fig. 8 is a flow chart for displaying the relation of the discharge voltage and actual machining speed to a machining distance according to an example of the present invention;
Fig. 9 is a view showing an exemplary display of a distribution of measurements of the actual machining speed at corresponding machining locations according to an example of the present invention;
Fig. 10 is a view showing an exemplary display of the relation between the discharge voltage and the actual machining speed according to an example of the present invention;
Fig. 11 is a view showing an exemplary display of the relation of the discharge voltage and actual machining speed to the machining time according to an example of the present invention;
Fig. 12 is a view showing an exemplary display of the relation of the discharge voltage and actual machining speed to the machining distance according to an example of the present invention;
Fig. 13 is a flow chart for judging from the monitored data of the monitor apparatus in the electric discharge machine whether a workpiece is defective or not according to an example of the present invention;
Fig. 14 is an explanatory view defining the machining distance;
Fig. 15 is an explanatory view defining the machining location of the present invention;
Fig. 16 is an explanatory view showing transactions of the machining locations; and
Fig. 17 is a comparative diagram showing corresponding sampling locations designated along both a reference machining route and a present machining route.

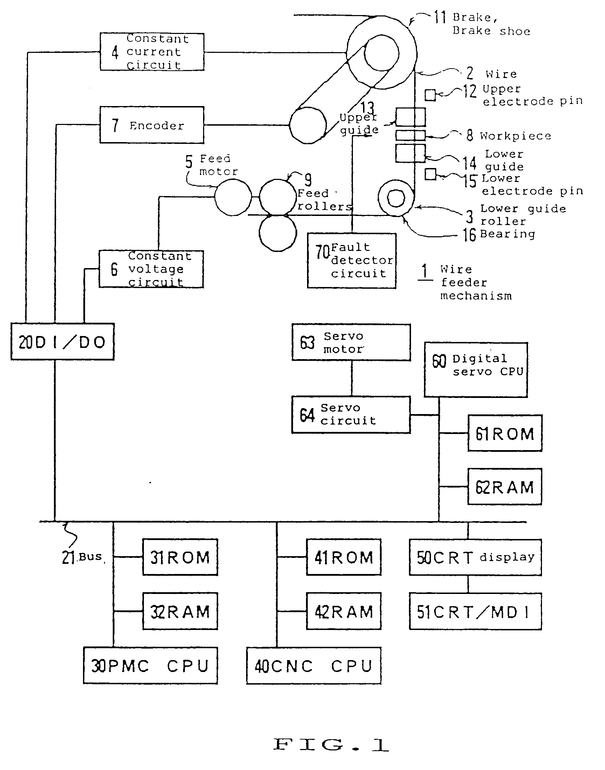

Fig. 1 is a block diagram of a wire-cut electric discharge machine illustrating the embodiment of the present invention.

As shown in Fig. 1, the wire-cut electric discharge machine has a wire 2 mounted between two, upper and lower, base units (not shown) which are disposed opposite to each other. The wire 2 starts from a wire feeder bobbin in an unshown wire supply station and runs through a brake and brake shoe 11, an upper electrode pin 12, an upper guide assembly 13, a workpiece 8, a lower guide assembly 14, a lower electrode pin 15, a lower guide roller 3, and feed rollers 9 to an unshown wire take-up station. In brief, the wire 2 is driven by a feed roller mechanism to travel from the wire supply station through a wire feeder mechanism 1 to the wire take-up station.

The feed roller mechanism comprises a brake roller and a brake pinch roller. The brake roller is controlled by a brake device actuated with a constant current circuit 4 and its brake shoe 11 acts directly on the wire 2 for adjusting the running of the wire 2. The brake device may be a powder brake in which the brake roller is coupled to and controlled with a powder clutch for rotation. The brake roller is also connected to an encoder 7 for detecting the rotation of the brake roller thus the movement of the brake shoe 11.

The wire take-up station has the feed rollers 9 driven by a feed motor 5, which is energized with a voltage from a constant voltage circuit 6, for taking up the wire 2 at a predetermined speed.

Accordingly, as the wire take-up station and wire supply station constitute in a combination a wire tensioning means, the voltage can be impressed to produce a spark between the wire 2 and the work piece 8 for machining the work piece 8 to a desired shape.

The upper guide assembly 13 directs the running of the wire 2 with its built-in rollers and the lower guide assembly 14 receives the wire 2 from the upper guide assembly 13 with its 3-point guide member before feeding into the feed rollers 9. A group of the two, upper and lower, guide assemblies 13, 14 with a wire-cut water jet assembly mounted on the upper guide assembly 13 and the wire feeder mechanism 1 is operable as an automatic splicing device.

The wire feed mechanism and the automatic splicing device are provided with error detecting means (not shown) which all are connected to an error detector circuit 70.

The constant current circuit 4, constant voltage circuit 6, encoder 7, and error detector circuit 70 are connected by an input/output circuit 20 (referred to as DI/DO hereinafter) to a bus 21. Hence, transmission of control signals from CPU to the constant current circuit 4 and constant voltage circuit 6, transmission of measurement signals from the encoder 7 to CPU, and transmission of error detection signals from the error detector circuit 70 to CPU are executed via the DI/DO 20. The DI/DO 20 is also coupled to a discharge power source which supplies a discharge voltage to the wire 2 between two, upper and lower, electrode pins 12, 15, as is not shown.

The bus 21 with the DI/DO 20 is connected to a programmable controller (or PMC) CPU 30, a numerical control (or CNC) CPU 40, a CRT display 50, and a servo system. The PMC CPU 30 and CNC CPU 40 are coupled to a ROM 31 and a RAM 32 and to a ROM 41 and a RAM 42 respectively. The CRT display 51 is coupled to an input/output device 51 (referred to as CRT/MDI hereinafter). The CRT display 51 is a visual display terminal for display of a variety of monitored measurements sampled in the wire feed mechanism and other information, in where a CRT screen gives a visual representation of e.g. automatic wire feeding failure according to a display program stored in the ROM 31. The servo system comprises a digital servo CPU 60, a ROM 61, a RAM 62, a servo motor 63, and a servo control circuit 64 and is used for controlling the movement relative to the wire 2 of a work table on which the workpiece 8 is fixedly placed.

The ROM 31 serves as a program memory holding various programs for displaying the monitored measurements and controlling the actions of components of the wire-cut electric discharge machine and of its control device.

The RAM 32 is a data memory for storage of position data attributed to machining programs setting data of the monitored measurements. It is also used as a temporal data memory for storage of relevant data during arithmetic operations of the CPU 30 and has a registering area for counting output pulses of the encoder 7.

The ROM 41 acts as a program memory of a CNC device for position control of the work table. The RAM 42 is a data memory for storage of position data attributed to a machining program to be used and for temporal storage of data of arithmetic operations.

The visual display terminal is not limited to the CRT display 50 shown in Fig. 1 but may be any display means such as a liquid crystal display.

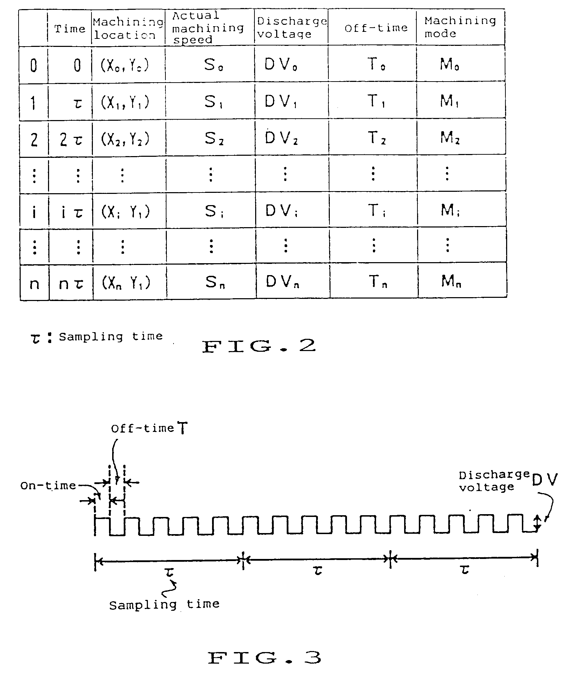

Monitoring requirements for the electric discharge machine according to the present invention will now be explained. Fig. 2 is a table of monitored measurements of the requirements which are sampled for storage in a memory such as the RAM 32. The requirements in Fig. 2 are illustrated as an example for the electric discharge machine according to the present invention, in which the sampling is executed at equal intervals of $\tau$ and the sampling time is thus expressed by 0, $\tau$, $2\tau$, ..., $i\tau$, .... Monitored measurements of the requirements on the workpiece 8 obtained at the sampling time of 0 to $\tau$, $2\tau$, ..., $i\tau$, ... are represented by $(X_0,Y_0)$, $(X_1,Y_1)$, $(X_2,Y_2)$, ..., $(X_i,Y_i)$, ... of the machining location, $S_0$, $S_1$, $S_2$, ..., $S_i$, ... of the actual machining speed, $DV_0$, $DV_1$, $DV_2$, ..., $DV_i$, ... of the discharge voltage, $T_0$, $T_1$, $T_2$, ..., $T_i$, ... of the off-time, and $M_0$, $M_1$, $M_2$, ..., $M_i$, ... of the machining mode.

The machining location $(X_i,Y_i)$ is where the workpiece 8 is machined with the wire 2 at the sampling time $i\tau$ as is determined by the movement in both X and Y directions of the work table. The actual machining speed $S_i$ is a moving speed of the workpiece 8 at the sampling time $i\tau$ which is expressed by a movement per duration of the work table. The discharge voltage $DV_i$ is a discharge voltage imposed between the workpiece 8 and the wire 2 equal to a voltage potential on the wire 2 between the upper and lower electrode pins 12, 15. And the discharge voltage DVi may be determined by measuring the supply voltage. The machining mode $M_i$ represents a type of machining, e.g. straight line, arcuate shape, or sharp corner, which is determined by a machining program used. The off-time $T_i$ is a duration of time during which the discharge voltage DV is not imposed on to the wire 2 in the sampling period $\tau$, as shown in the waveform of a supply voltage in Fig. 3. Conversely, the on-time means a duration of time in which the discharge voltage DV is being applied to the wire 2 in the sampling period $\tau$. The off-time $T_i$ and the on-time are determined according to the conditions required for the machining and will thus be controlled by relevant instructions of the program.

The other monitoring requirements than the prescribed include the total number of discharges, the number of fault discharges, the rate of fault sparking, the power of discharge, etc. The total number of discharges represents a number of discharges in a unit time such as sampling period $\tau$ (for example, between the two consecutive sampling times $i\tau$ and $(i+1)\tau$) as is expressed by the number of pulses in the sampling period $\tau$ in Fig. 3. The total number of discharges is predetermined depending on the machining task and can be included in the instructions of the program. The number of fault discharges is a sum of not normal discharges conducted during the sampling period $\tau$ and can be calculated by monitoring and comparing a discharge voltage DV with the supply voltage. The fault discharge rate is a ratio of the number of fault discharges to the total number of discharges. The discharge power is an energy required for sparking and can be calculated from the voltage and current of a power supply.

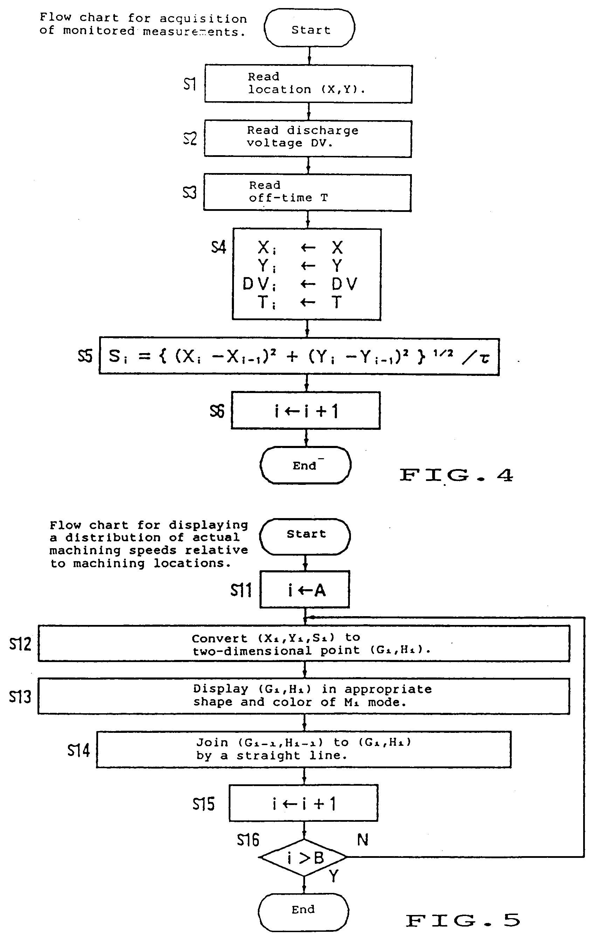

The acquisition of the measurements of the monitoring requirements for the electric discharge machine will now be explained referring to the flowchart of Fig. 4. In the flowchart, the prescribed monitoring requirements including the machining location, actual machining speed, discharge voltage, off-time, and machining mode listed in Fig. 2 are monitored for the electric discharge machine at a sequence of steps of which serial numbers are accompanied with Step S.

As shown, the machining location (X,Y), discharge voltage DV, off-time T, and machining mode M, except the actual machining speed S, are simply obtained by reading from the memory data. The procedure starts with reading of the machining location (X,Y) at Step S1. The reading of the actual machining location (X,Y) may be executed through measuring a movement of the work table. For example, it is obtained by calculating outputs of the servo motor 63 or the servo control circuit 64 which controls the movement of the work table. The discharge voltage DV is read by measuring a supply voltage for producing a spark between the electrodes (Step S2). The off-time T is then read from the setting values predetermined in a machining program (Step S3). The steps S1 to S3 may arbitrarily be varied in their order. Similarly, the machining mode M is retrieved from the program.

The measurements obtained in Steps S1 to S3 are recorded into a memory such as the RAM 32 (Step S4). The recording involves storage of the measurement sampled at every sampling time.

Then, the machining speed S is calculated using the machining location (X,Y) read from the memory and recorded into the memory. More specifically, the machining speed S is determined from:

$$S_i = \{(X_i\text{-}X_{i\text{-}1})^2+(Y_i\text{-}Y_{i\text{-}1})^2\}^{1/2}/\tau \qquad (1)$$

The sequence from S1 to S4 is repeated at equal intervals of the sampling period $\tau$ for acquisition of the monitored measurements (Step S6).

After the steps of acquisition of the monitored measurements, a list of the monitoring requirements shown in Fig. 2 is completed for the electric discharge machine. By examining the monitored measurements sampled at equal intervals of the sampling period $\tau$, the change during the machining operation of the electric discharge machine can be identified.

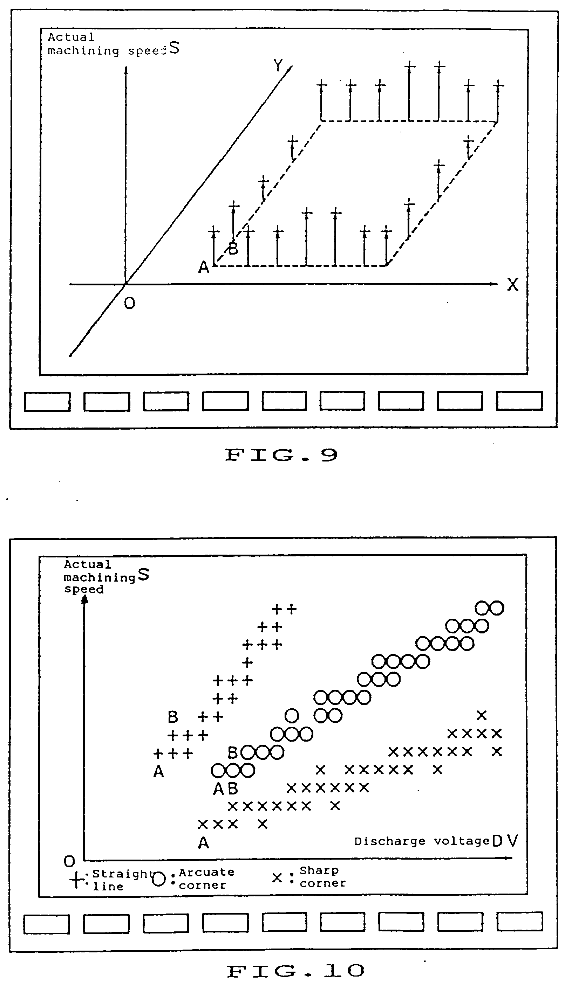

The display of the monitored data or measurements will be explained referring to flowcharts of Figs. 5 to 8 and exemplary displays of Figs. 9 to 12.

The measurements of the actual machining speed relative to corresponding machining locations are processed by a manner of the flowchart of Fig. 5 for display in the form of a distribution map as shown in Fig. 9. Fig. 9 illustrates an exemplary display of the actual machining speed on the display device 50 where the actual machining speed S is expressed along the z axis with the work piece 8 placed on the x-y coordinates plane. The machining route across the workpiece 8 is denoted by the broken line extending on the x-y plane. The actual machining speed S at any location of the machining route is expressed by the + sign and the arrow in the z direction. The height or distance in the z direction represents the amplitude of the actual machining speed S. The display of the monitored measurements of the actual machining speed S starts from the point A and terminates at the point B. As described later in more detail, the size of the display can be varied by assigning the A and B points to desired locations in the coordinates.

The display of the measurements of the actual machining speed at their corresponding locations shown in Fig. 9 is commenced with Step S11 of the flowchart of Fig. 5 where the index i is set to A. As the index A is given, the sampling time $i\tau$ is shifted to $A\tau$ which is a new start time. If A is 0, the display starts at the initial sampling time. After the sampling time is preset at Step S11, the machining location (X,Y) and the actual machining speed S at the location are selectively read and extracted from the monitored data in the memory to determine the point $(X_i, Y_i, S_i)$ of the sampling time $i\tau$. The point $(X_i, Y_i, S_i)$ is then converted to a point $(G_i, H_i)$ in the two-dimensional coordinates for display on a screen. The conversion to the coordinate data may be executed using a known coordinate transformation method (Step S12). The two-dimensional point $(G_i, H_i)$ is recorded into a memory such as the RAM 32.

The two-dimensional point $(G_i, H_i)$ obtained at Step S12 is then displayed on the screen. The display on the screen may be controlled in both shape and color by the mode data $M_i$ predetermined and stored in the memory (Step S13). For example, it is now assumed for defining the machining mode that the straight line machining is represented by "+", the arcuate line machining by "o", and the sharp corner machining by "x".

It is also possible to join by a line the point expressed by (G,H) obtained at Step S13 with its time adjacent point (Step S14). More particularly, the point $(G_i, H_i)$ can be joined by an arbitrary line with a point $(G_{i-1}, H_{i-1})$ for enhancement of the display. This step S14 is not mandatory and may be skipped over.

After the procedure with the index i is completed, "1" is added to "i" before repeating the same steps to display the data of the sampling time $(i+1)\tau$ (Step S15). The display of corresponding data sampled at the succeeding sampling time is continued until it comes to the final point B. For verification of the display of the point B, it is examined whether or not the index i exceeds the value of B. The steps S12 to S15 are repeated until the index i exceeds B (Step S16).

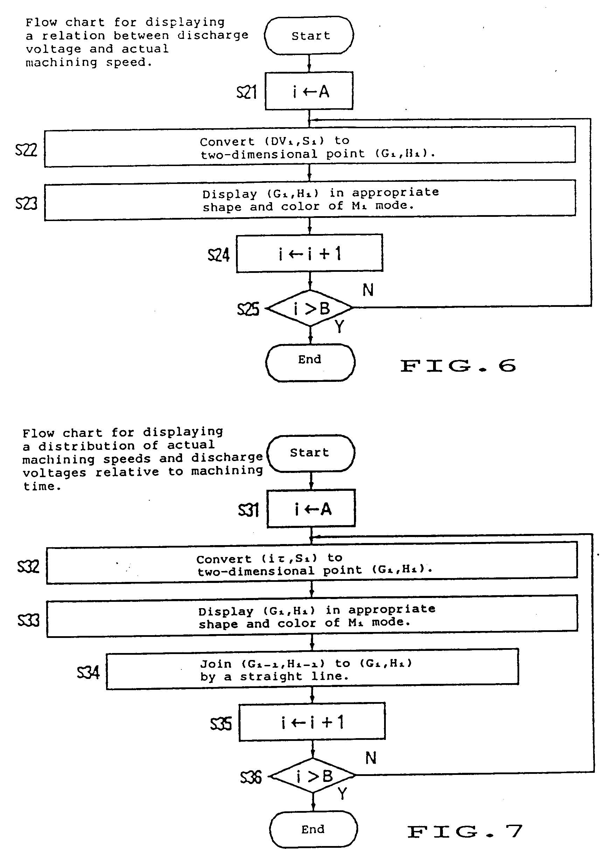

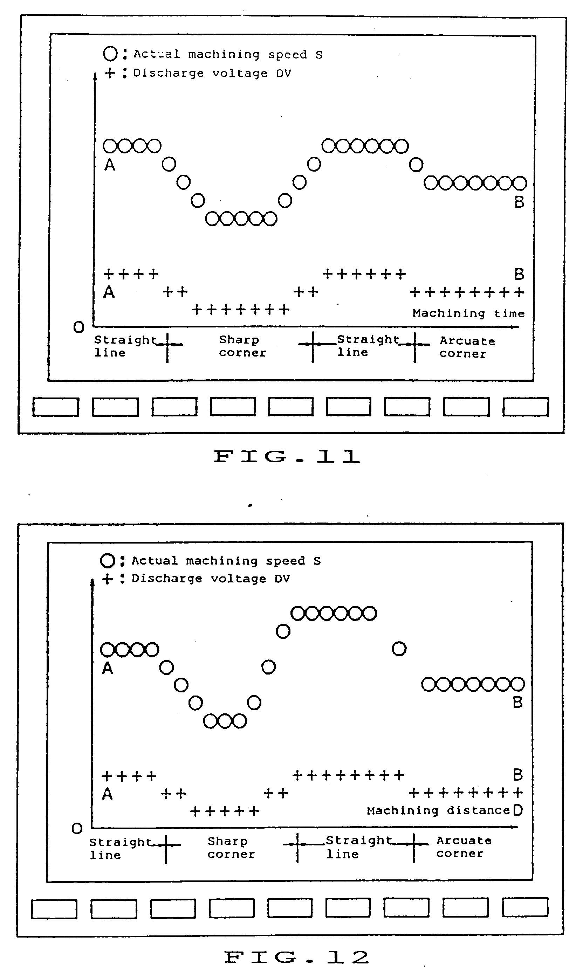

The display of the relation between the discharge voltage DV and the actual machining speed S will be explained referring to the flowchart of Fig. 6 and an exemplary display shown in Fig. 10. As shown in Fig. 10, the display on the display device 50 indicates the discharge voltage DV along the x axis and the actual machining speed S on the y axis and more particularly, the variation of the actual machining speed S relative to the discharge voltage DV. The converse is also possible in which the x axis represents the actual machining speed S while the y axis is the discharge voltage DV.

As shown, the machining mode is displayed in different forms as the straight line machining is represented by "+", the arcuate line machining by "o", and the sharp corner machining by "x". A succession of the monitored measurements are displayed from A to B, similar to Fig. 9.

The procedure of displaying the relation between the discharge voltage DV and the actual machining speed S as shown in Fig. 10 starts with Step S21 of the flowchart of Fig. 6 where the index i is set to "A". By the index A, the sampling time $i\tau$ is assigned to $A\tau$ which is a new start time. If A is "0", the display starts at the initial sampling time. After the sampling time is preset at Step S21, the discharge voltage DV and the actual machining speed S of the location are selectively retrieved from the monitored data in the memory to determine the point

$(DV_i, S_i)$ of the sampling time $i\tau$. The point $(DV_i, S_i)$ is then converted to a point $(G_i, H_i)$ in the two-dimensional coordinates for display on a screen. The conversion to the coordinate data may be executed using a known coordinate transformation method (Step S22). The two-dimensional point $(G_i, H_i)$ is recorded into a memory such as the RAM 32.

The two-dimensional point $(G_i, H_i)$ obtained at Step S22 is then displayed on the screen. The display on the screen may be controlled in both shape and color by the mode data $M_i$ predetermined and stored in the memory (Step S23). For example, it is assumed for defining the machining mode that the straight line machining is represented by "+", the arcuate line machining by "o", and the sharp corner machining by "x".

After the procedure with the index i is completed, "1" is added to i before repeating the same steps to display the data of the sampling time $(i+1)\tau$ (Step S24). The display of corresponding data sampled at the succeeding sampling time is continued until it comes to the final point B. For verification of the display of the point B, it is examined whether or not the index i exceeds the value of B (Step S25). If not, the steps S22 to S25 are repeated until the index i exceeds B.

The change with time of both the actual machining speed S and the discharge voltage DV will now be explained referring to the flowchart of Fig. 7 and an exemplary display shown in Fig. 11. Fig. 11 illustrates the exemplary display on the display device 50 where the time is expressed on the x axis while both the actual machining speed S and the discharge voltage DV are along the y axis. More particularly, the change with time of the actual machining speed S and the of the discharge voltage DV is displayed.

As shown, the actual machining speed S is denoted by "o" and the discharge voltage DV is by "+". The start and terminate points for displaying the monitored measurements are represented by A and B respectively, similar to Fig. 9. The machining mode is also shifted with time as associated closely with changes in the actual machining speed S and discharge voltage DV.

The display of change with time of the actual machining speed S and the discharge voltage DV shown in Fig. 11 is commenced with Step S31 of the flowchart of Fig. 7 where the index i is set to "A". With the index A, the sampling time is assigned to $A\tau$ which represents a new start time. After the sampling time is preset at Step S31, the actual machining speed $S_i$ at the sampling time $i\tau$ is selectively read from the monitored data stored in the memory to determine the point $(i\tau, S_i)$ of the sampling time $i\tau$. The point $(i\tau, S_i)$ is then converted by a known coordinate transformation method to a point $(G_i, H_i)$ in the two-dimensional coordinates for display on a screen (Step S32). The two-dimensional point $(G_i, H_i)$ is recorded into a memory such as the RAM 32.

The two-dimensional point $(G_i, H_i)$ obtained at Step S32 is then displayed on the screen. The display on the screen may be controlled in both shape and color by the mode data $M_i$ predetermined and stored in the memory (Step S33). For example, it is assumed for ease of the display that the actual machining speed S is expressed by "o" and the discharge voltage DV is by "+". It is also possible to join by a line the point (G,H) obtained at Step S33 with its time adjacent point (Step S34). More particularly, the point $(G_i,H_i)$ can be joined by an arbitrary line with a point $(G_{i-1},H_{i-1})$ for enhancement of the display. This step S34 is not mandatory and may be skipped over.

After the procedure with the index i is completed, "1" is added to i before repeating the same steps to display the data at the sampling time $(i+1)\tau$ (Step S35). The display of corresponding data sampled at the succeeding sampling time is continued until it comes to the final point B. For verification of the display of the point B, it is examined whether or not the index i exceeds the value of B. The steps S32 to S35 are repeated until the index i exceeds B (Step S36).

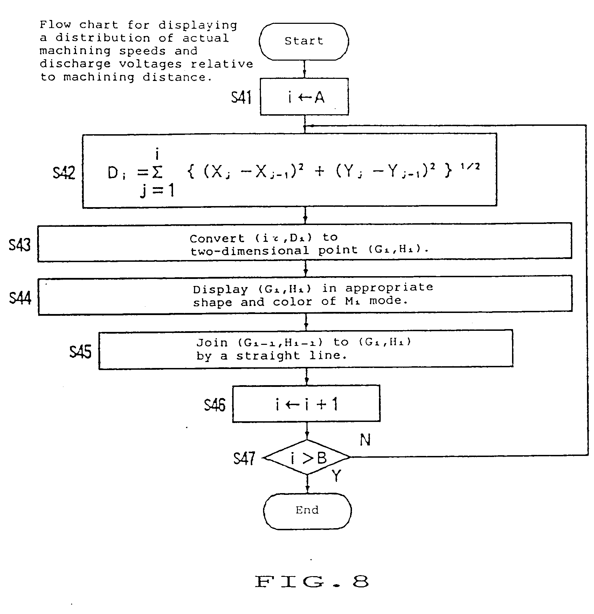

Also, the change of the actual machining speed and discharge voltage relative to a machining distance can be displayed as well as the change with time of the same. The display of the change relative to the machining distance will be described referring to the flowchart of Fig. 8 and an exemplary display shown in Fig. 12. The display in Fig. 12 is similar to that in Fig. 11 except that the x axis represents the machining distance and will be explained in no more details.

The flowchart of Fig. 8 illustrates a procedure of steps, starting with S41, for displaying the change relative to the machining distance of the actual machining speed S and discharge voltage DV as shown in Fig. 12. The flowchart of Fig. 8 is substantially similar to that of Fig. 7, except that a step S42 for calculating the machining distance $D_i$ is provided between S41 where the index i is set to A (as is identical to S31 of the flowchart of Fig. 7) and S43 where the point data $(D_i,S_i)$ of the machining distance $D_i$ at the sampling time $i\tau$ is converted to a two-dimensional coordinate data $(G_i,H_i)$ for display on a screen (as is identical to S32 of the flowchart of Fig. 7).

The machining distance $D_i$ is calculated from Equation 1 which is expressed by:

$$D_i = \sum_{j=1}^{i} \{(X_j - X_{j-1})^2 + (Y_j - Y_{j-1})^2\}^{1/2} \qquad (2)$$

The steps S43 to S47 in Fig. 8 are equal to S32 to S36 in Fig. 7.

The judgment on a workpiece resides in comparison between the recorded monitored data and the present monitored data. When a non-defective or good workpiece has been verified, its monitored measurements are recorded as reference values into a memory for reuse. The reference values are then retrieved and compared with the monitored measurements of a current workpiece for examining if the present measurements are within an allowance range. More particularly, assuming that the reference location is at $(U_i,V_i)$ and the present location is at $(X_j,Y_j)$, it is not always true that $(U_i,V_i)$ coincides with $(X_j,Y_j)$. The judgment is thus started before examining the monitored measurement of the present location with examining if a distance between $(U_i,V_i)$ and $(X_j,Y_j)$ is not larger than a predetermined value M and if a difference in the machining distance not exceeds a predetermined value L so as to determine that the present location corresponding to the reference location $(U_i,V_i)$ is eligible for the judgment.

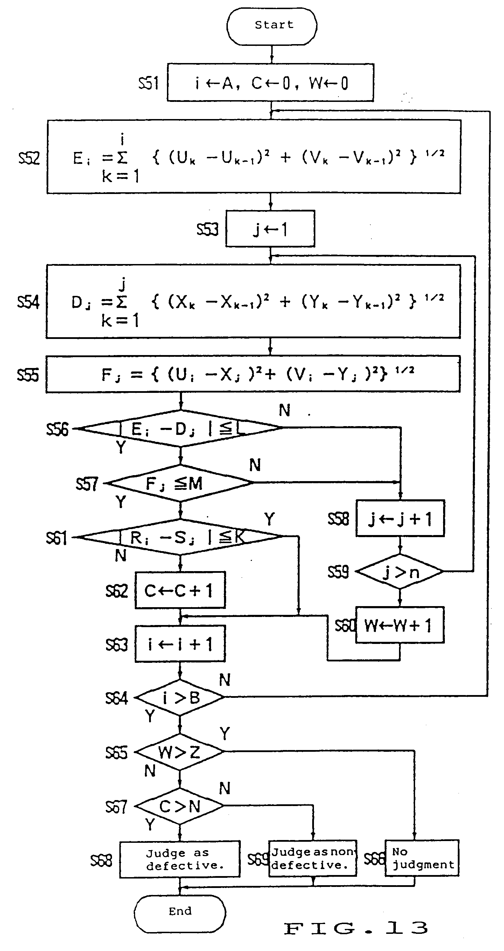

The procedure of judging a workpiece by its monitored measurements sampled in the electric discharge machine of the present invention will be described on a step-by-step basis referring to the flowchart of Fig. 13 which starts with Step S51.

At Step S51, the indices i, C, and W are set to "A", "0", and "0" respectively. The index i is assigned to the sampling time and when set to "A", the sampling time is expressed by $A\tau$. When A is zero, the display is made at the initial sampling time.

The index C is a counter value indicating the number of fault locations where the monitored data exceed the reference value. The index W is a counter value specifying whether or not the present location is close enough to compare with the monitored measurements of the reference location. Accordingly, the two indices C and W are initialised to "0" at Step S51.

At Step S52, the machining distance $E_i$ from the origin along the machining route on a workpiece is calculated from Equation 2 which is expressed by:

$$E_i = \sum_{k=1}^{i} \{(U_k - U_{k-1})^2 + (V_k - V_{k-1})^2\}^{1/2} \qquad (3)$$

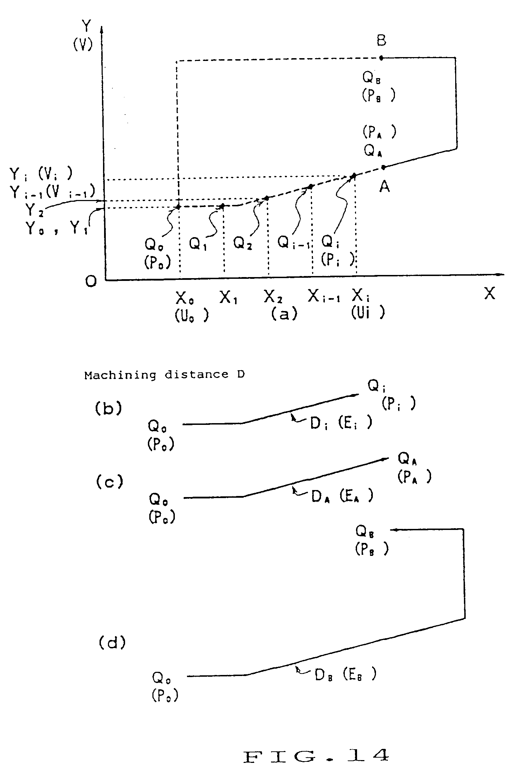

As best shown in Fig. 14, the machining distance $E_i$ on the workpiece is a distance extending from the origin $P_0$ of a reference workpiece to a present location of the sampling time $i\tau$. If the present location is at $P_i(U_i,V_i)$ of the sampling time $i\tau$, its machining distance $E_i$ is a sum of movements during the total sampling periods as denoted by the Equation 3 (see $E_i$ shown in Fig. 14-b). When the display starts from a point $P_A$ at the sampling time $A\tau$, the machining distance from the origin $P_0$ is $E_A$ as illustrated in Fig. 14-c. When the display starts from a point $P_B$ at the sampling time $B\tau$, the machining distance from the origin $P_0$ is $E_B$ as illustrated in Fig. 14-d.

At Step 53, the index j is set to "1" as an initial value for designating the machining distance.

The machining distance $D_j$ from the origin along the machining route on a current workpiece is then calculated at Step S54 using Equation 4 which is expressed by:

$$D_j = \sum_{k=1}^{j} \{(X_k-X_{k-1})^2+(Y_k-Y_{k-1})^2\}^{1/2} \qquad (4)$$

As best shown in Fig. 14, the machining distance $D_j$ is a movement along the machining route on the workpiece from its origin $Q_0$ to a location at the sampling time $j\tau$. If the location at the sampling time $j\tau$ is $Q_j(X_j,Y_j)$, the machining distance $D_j$ is a sum of movements during the total sampling periods as denoted by Equation 4 (see $D_j$ in Fig. 14-b). When the display starts from a point $Q_A$ at the sampling time $A\tau$, the machining distance from the origin $Q_0$ is $D_A$ as illustrated in Fig. 14-c. When the display starts from a point $Q_B$ at the sampling time $B\tau$, the machining distance from the origin $Q_0$ is $D_B$ as illustrated in Fig. 14-d.

At Step S55, a distance $F_j$ between the reference location $P_i(U_i,V_i)$ and the present location $Q_j(X_j,Y_j)$ is calculated from:

$$F_j = \{(U_i-V_j)^2+(V_i-V_j)^2\}^{1/2} \qquad (5)$$

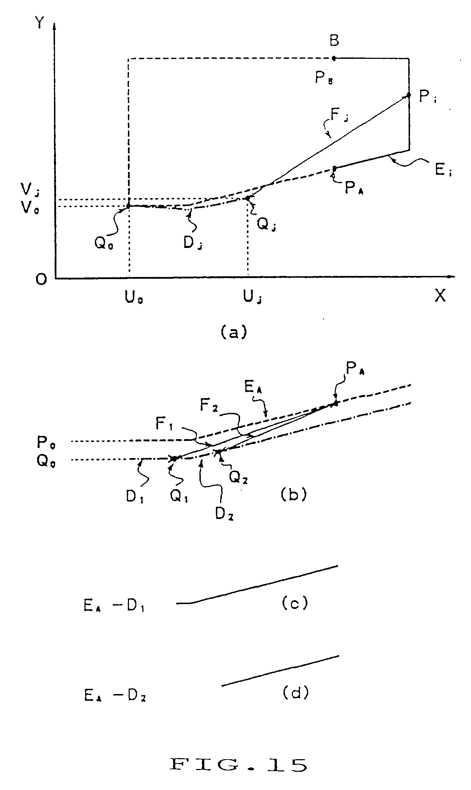

The distance $F_j$ is a straight length between the reference location $P_i$ and the present location $Q_j$ denoted by the real line in Fig. 15-a. As the present location $Q_j$ moves, its distance to the display start location $P_A$ is shifted from $F_1$ to $F_2$ which both are denoted by the real lines in Fig. 15-b.

It is then examined at Steps S56 and S57 whether or not the present location $Q_j$ is eligible for comparison with the monitored measurements of the reference location $P_i$.

More specifically at Step S56, a difference between the reference distance $E_i$ determined at Step S52 and the present distance $D_j$ determined at Step S54 is calculated and examined if it is smaller or equal to the predetermined value L. The difference between $E_i$ and $D_j$ is expressed as $|E_i-D_j|$. For example, if the distance from the reference display start location $P_A$ is $E_A$, the difference between $E_A$ and $D_j$ with j=1 is $E_A-D_1$ as best shown in Fig. 15-c. Also, when j=2, the difference between $E_A$ and $D_j$ is $E_A-D_2$ as shown in Fig. 15-d.

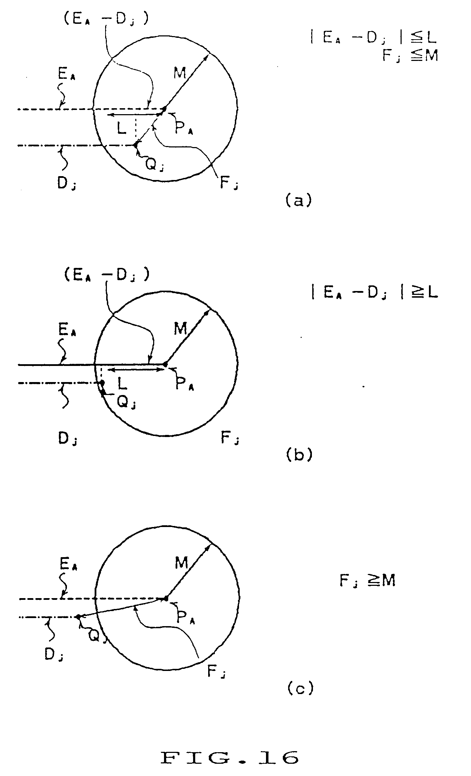

When $|E_A-D_j|$ is not larger than L, the difference denoted by the broken line in Fig. 16-a between the distance $E_A$ to the reference display start location and the present machining distance $D_j$ is not larger than L. This means that a difference between the accumulated length to $P_A$ and the accumulated length to $Q_j$ is smaller than or equal to L. Conversely, when $|E_A-D_j|$ is larger than L, the difference denoted by the broken line in Fig. 16-b between the reference distance $E_A$ and the present machining distance $D_j$ is larger than L. This means that a difference between the accumulated length to $P_A$ and the accumulated length to $Q_j$ is larger than L.

Accordingly, when the difference between the distance $E_A$ to the reference display start location and the present machining distance $D_j$ is not larger than L, it is judged at Step S56 that the present location $Q_j$ is eligible for comparison in respect of the machining distance. Then, the procedure goes to the next step S57 for examining the straight line F. If the difference between $E_A$ and $D_j$ is larger than L, "1" is added to j at Step S58 and the distance $D_{j+1}$ at the succeeding sampling time $(j+1)\tau$ is examined by repeating the steps S54 to S56. The procedure from S54 to S56 shall be repeated as following S58 until the index j comes to n so that all the locations at their respective sampling times are examined (Step S59). As the result, any machining location at a corresponding sampling time of the reference data can be examined along the machining route on the current workpiece whether or not its difference from the reference distance is not larger than L.

After it is determined at Step S56 that the difference between the reference distance $E_A$ and the present distance $D_j$ is smaller than L and the present location $Q_j$ is eligible, it is then examined at Step S57 whether or not the straight line $F_j$ between the present location $Q_j$ and the reference location $P_i$ as calculated at Step S55 is smaller than or equal to the predetermined value M. The purpose of this step is to examine whether or not the present location $Q_j$ is adjacent to the reference location $P_i$, because there is still a possibility of the present location $Q_j$ being considerably spaced from the reference location $P_i$ when it has been judged at Step S56 that $Q_j$ is closely approximate to $P_i$.

When it is determined at Step S57 that the straight line $F_j$ is not larger than M and thus, the present location $Q_j$ is situated adjacent to the reference location $P_i$, the procedure moves to Step S61 for comparison of the monitored measurements. Fig. 16-a illustrates that $F_j$ is not larger than M, and it means that the present location $Q_j$ is within a circle having the center of $P_i$ and the radius of M. If $F_j$ is larger than M, it is judged that the present location $Q_j$ is not adjacent to the reference location $P_i$ and the procedure goes to Step S58 where "1" is added to j. Then, the steps S54 to S56 are repeated to examine the distance $D_{j+1}$ at the succeeding sampling time $(j+1)\tau$. Fig. 16-c shows $F_j$ is larger than M. This indicates that the present location $Q_j$ is outside the circle having the center of $P_i$ and the radius of M. The steps S54 to S56 shall be repeated until j comes to n as following Step S58 so that all the locations at their respective sampling times are examined (Step S59). As the result, any machining location at a corresponding sampling time of the reference data can be examined along the machining route on the current workpiece whether or not the straight line joining the present location and the reference location is smaller than or equal to M.

Fig. 16-a indicates that both the distance and the straight line fall in their respective limitations as are judged eligible at the two steps S56 and S57 respectively.

After it is determined at Step S59 that the data at each sampling time fails to satisfy the requirements at Step S56 or S57, the procedure goes to Step S60. At Step S60, the index W as a counter value for judging the present location whether or not it is adjacent to the reference location for allowing the comparison of the monitored measurements is increased by "1" and at Step S63, the monitored data at the succeeding location are examined.

When it is judged at Steps S56 and S57 that the present location $Q_j$ is eligible to compare with the monitored measurement of the reference location $P_i$, the comparison of the monitored data between the two locations is conducted at Step S61. We will explain the comparison at Step S61 using the actual machining speed S as an exemplary one of the monitoring requirements.

The comparison in the actual machining speed includes examining whether or not a difference between the reference actual machining speed $R_i$ across the reference location $P_i$ at the sampling time $i\tau$ and the actual machining speed $S_j$ on the current workpiece across the present machining location $Q_j$ at the sampling time $j\tau$ is not larger than a predetermined value K.

When the difference is not larger than K, it is judged that the real machining speed $S_j$ across the present machining location $Q_j$ at the sampling time $j\tau$ is equivalent to that used for successfully machining the reference workpiece and the procedure advances to Step S63. And at Step S63, a reference value of the machine distance Ei for comparison may be initialized. If the difference is larger than K, it is determined that the real machining speed $S_j$ across the present machining location $Q_j$ at the sampling time $j\tau$ is distinguished from that used for successfully machining the reference workpiece and the procedure moves to Step S62.

When it is determined at Step S61 that the real machining speed $S_j$ across the present machining location $Q_j$ at the sampling time $j\tau$ is distinguished from that used for successfully machining the reference workpiece, the index C is increased by "1" at Step S62 for initializing the counter value representing fault locations where any of the monitored data exceeds its limitation. By reading the index C or counter value, the number of fault locations on the machining route can be identified.

At Step S63, the index i is increased by "1" for initializing a reference value of the machining distance $E_i$ for comparison.

It is then examined at Step S64 whether or not the machining location $P_i$ at the sampling time $i\tau$ initialized at Step S63 reaches the final point B. This step is executed by comparing between i and B. If i is not larger than B, it is judged that the location $P_i$ at the sampling time $i\tau$ does not reach the final point B but is on the displayed track. Hence, the procedure goes back to S52 where the calculation of a new value of the distance $E_i$ is conducted as followed by repeating the steps S53 to S63.

When i is larger than B, it is determined that the location $P_i$ has reached or passed the final point B and is out of the displayed track. The procedure then advances to Step S65 for further examination.

At Step S65, it is examined whether or not the number of the sampling locations in the displayed track is adequate for performing the comparison of monitored measurements. More specifically, the comparison is carried out by examining whether or not the index W or counter value initialized at Step S60 is larger than a predetermined value Z. The index W represents the number of fault sampling locations which are too far from the reference locations for the comparison. If W>Z, the number of the fault sampling locations is too large in relation to the total sampling number on the machining route and it is concluded at Step S66 that the judgment is disabled.

When W is not larger than Z, the number of the fault sampling locations is favorably less in relation to the total sampling number. This means that the number of the eligible sampling locations on the displayed track is adequate for the comparison of the monitored measurements and the procedure goes to Step S67 for final judgment.

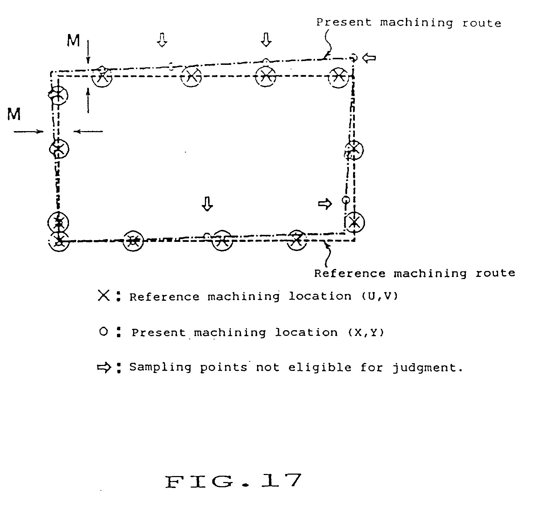

Fig. 17 illustrates a comparative diagram showing the sampling locations on both the reference machining route and the present machining route. As shown, the sampling locations along the reference machining route (denoted by the broken line in Fig. 17) are represented by "x" and along the present machining route (denoted by the one-dot chain line) are presented by "o". When the sampling location along the present machining route is within a circle designated by the center of a corresponding reference location and the radius of M, it is eligible for comparison of the monitored data. If the sampling location is out of the circle, it shall be disqualified. Such fault sampling locations along the present machining route which are not eligible for use in examining the monitored measurements are denoted by the arrow marks in Fig. 17.

As described, when the number of eligible sampling locations for comparison of the monitored data is less, it is concluded to indicate at Step S66 that no judgment is valid.

The judgment whether the workpiece is good or not is performed at the steps S67 to S69. For the purpose, it is examined whether or not the index C indicative of the number of fault locations along the machining route for the examination is larger than a predetermined value N. If C is larger than N, as the number of the fault locations is too large, the current workpiece is judged to be a defective product and a resultant conclusion is displayed. When C is not larger than N as the number of the fault locations is favorably less, the workpiece is judged to be a non-defective product and its qualification is displayed.

Although a single measurement of each monitoring requirement is displayed according to the embodiment, the monitored measurement may be sampled and recorded a plurality of times at the same location and thereafter, displayed as overlapped on a screen to specify a change in the measurement at the location during the electric discharge machining.

The monitoring requirement is not limited to the actual machining speed in the embodiment and may be selected separately or in a combination from the discharge voltage, total number of discharges. number of fault discharges, rate of fault discharges, discharge powder, and other appropriate parameters.

Although the monitored measurements for comparison are sampled along the machining route according to the embodiment, they may be obtained for a unit machining length.

## Claims

1. A monitor apparatus in combination with an electric discharge machine and comprising: a memory means (32) adapted for storing, at each one of given times, a monitored measurement of working data which is indicative of a present state of electric discharge machining; a display means (50,51) adapted for displaying the present state of electric discharge machining by means of a monitored measurement retrieved from said memory means (32); and a converting means (30) adapted for converting monitored measurements into visual representations for display on the display means (50,51), the display means (50,51) being operable to display visual representations of different types of said monitored measurements;

   characterised in that the monitor apparatus is adapted to provide the following displays of visual representations of monitored measurement:

   (a) monitored measurements of working data at their corresponding locations on a machining path, the display providing a three-dimensional representation;
   (b) monitored measurements of different types in a machining process, whereby the relation between the different types of working data in the machining process is visualized; and
   (c) monitored measurements of working data at different shapes of machining path as a machining process progresses, whereby the variation of working data at said different shapes is visualized.

2. A monitor apparatus in combination with an electric discharge machine according to claim 1, wherein said given times comprise sampling times.

3. A monitor apparatus in combination with an electric discharge machine according to claim 1 or 2, wherein a plurality of displayed monitored measurements comprises one specific type thereof throughout different electric discharge machining processes.

4. A monitor apparatus in combination with an electric discharge machine according to claim 1, 2 or 3, wherein a plurality of displayed monitored measurements comprises discrete types thereof in one electric discharge machining process.

5. A monitor apparatus in combination with an electric discharge machine according to claim 3, or claim 4 when appended to claim 3, wherein one of said different electric discharge machining processes is designated in which a non-defective product is obtained.

6. A monitor apparatus in combination with an electric discharge machine according to any one of the preceding claims, wherein the converting means (30) is capable of comparing monitored measurements in one electric discharge machining process with those in another such process.

7. A monitor apparatus in combination with an electric discharge machine according to claim 6 when appended to claim 5, wherein said one electric discharge machining process is one in which a non-defective product is obtained, and the comparison leads to a judgement as to whether a non-defective product is also obtained in said another such process.

8. A monitor apparatus in combination with an electric discharge machine according to any one of the preceding claims, wherein the converting means (30) is capable of judging the result of electric discharge machining by selectively determining adjacent sampling locations in different electric discharge machining processes, and comparing the monitored measurements at their respective sampling locations.

9. A monitor apparatus in combination with an electric discharge machine according to any one of the preceding claims, wherein in said display (a) the working data is actual machining speed.

10. A monitor apparatus in combination with an electric discharge machine according to any one of the preceding claims, wherein in said display (b) the different types of working data are actual machining speed and discharge voltage.

11. A monitor apparatus in combination with an electric discharge machine according to any one of the preceding claims, wherein in said display (c) the different shapes of machining path are a straight line, a sharp corner, and an arcuate corner.

## Patentansprüche

1. Überwachungsvorrichtung in Kombination mit einer elektrischen Entladungsmaschine, welche Überwachungsvorrichtung umfaßt:

   ein Speichermittel (32), das dazu bestimmt ist, zu jeder von gegebenen Zeiten eine Überwachungsmessung von Arbeitsdaten, die bezeichnend für einen gegenwärtigen Zustand einer elektrischen Entladungsberbeitung sind, zu speichern,
   ein Anzeigemittel (50, 51), das dazu bestimmt ist, den gegenwärtigen Zustand der elektrischen Entladungsbearbeitung mittels einer Überwachungsmessung, die aus dem Speichermittel (32) abgerufen ist, anzuzeigen, und
   ein Umsetzmittel (30), das dazu bestimmt ist, Überwachungsmessungen in visuelle Darstellungen zur Anzeige auf dem Bildschirm des Ahzeigemittels (50, 51) umzusetzen, wobei das Anzeigemittel (50, 51) betreibbar ist, visuelle Darstellungen verschiedener Arten der Überwachungsmessungen anzuzeigen,
   dadurch **gekennzeichnet,** daß die Überwachungsvorrichtung dazu bestimmt ist, die folgenden Anzeigen von visuellen Darstellungen der Überwachungsmessung bereitzustellen:

   (a) Überwachungsmessungen von Arbeitsdaten bei deren entsprechenden Orten auf einem Bearbeitungsweg, wobei die Anzeige eine dreidimensionale Darstellung bereitstellt,
   (b) Überwachungsmessungen verschiedener Arten in einem Bearbeitungsprozeß, wodurch die Beziehung zwischen den verschiedenen Arten von Arbeitsdaten in dem Bearbeitungsprozeß sichtbar gemacht wird, und
   (c) Überwachungsmessungen von Arbeitsdaten bei verschiedenen Formen eines Bearbeitungswegs, wenn ein Bearbeitungsprozeß fortschreitet, wodurch die Änderung von Arbeitsdaten bei den verschiedenen Formen sichtbar gemacht wird.

2. Überwachungsvorrichtung in Kombination mit einer elektrischen Entladungsmaschine nach Anspruch 1, wobei die gegebenen Zeiten aus Abtastzeiten bestehen.

3. Überwachungsvorrichtung in Kombination mit einer elektrischen Entladungsmaschine nach Anspruch 1 oder 2, wobei eine Vielzahl von angezeigten Überwachungsmessungen eine bestimmte Art derselben über verschiedene elektrische Entladungsbearbeitungsprozesse hinweg umfaßt.

4. Überwachungsvorrichtung in Kombination mit einer elektrischen Entladungsmaschine nach Anspruch 1, 2 oder 3, wobei eine Vielzahl von angezeigten Überwachungsmessungen diskrete Arten derselben in einem elektrischen Entladungsbearbeitungsprozeß umfaßt.

5. Überwachungsvorrichtung in Kombination mit einer elektrischen Entladungsmaschine nach Anspruch 3 oder Anspruch 4, wenn dieser auf Anspruch 3 rückbezogen ist, wobei einer der verschiedenen elektrischen Entladungsbearbeitungsprozesse gekennzeichnet wird, in dem ein nichtmangelhaftes Erzeugnis gewonnen ist.

6. Überwachungsvorrichtung in Kombination mit einer elektrischen Entladungsmaschine nach einem der vorhergehenden Ansprüche, in der das Umsetzmittel (30) in der Lage ist, Überwachungsmessungen in einem elektrischen Entladungsbearbeitungsprozeß mit solchen in einem anderen derartigen Prozeß zu vergleichen.

7. Überwachungsvorrichtung in Kombination mit einer elektrischen Entladungsmaschine nach Anspruch 6, wenn dieser auf Anspruch 5 rückbezogen ist, wobei der eine elektrische Entladungsbearbeitungsprozeß ein solcher ist, in dem ein nichtmangelhaftes Erzeugnis gewonnen ist, und der Vergleich zu einer Entscheidung darüber führt, ob auch in dem anderen Prozeß ein nichtmangelhaftes Erzeugnis gewonnen ist.

8. Überwachungsvorrichtung in Kombination mit einer elektrischen Entladungsmaschine nach einem der vorhergehenden Ansprüche, in der das Umsetzmittel (30) in der Lage ist, das Ergebnis der elektrischen Entladungsbearbeitung durch selektives Bestimmen benachbarter Abtastorte in verschiedenen elektrischen Entladungsbearbeitungsprozessen zu beurteilen und die Überwachungsmessungen bei deren jeweiligen Abtastorten zu vergleichen.

9. Überwachungsvorrichtung in Kombination mit einer elektrischen Entladungsmaschine nach einem der vorhergehenden Ansprüche, wobei in der Anzeige (a) die Arbeitsdaten die tatsächliche Bearbeitungsgeschwindigkeit sind.

10. Überwachungsvorrichtung in Kombination mit einer elektrischen Entladungsmaschine nach einem der vorhergehenden Ansprüche, wobei in der Anzeige (b) die verschiedenen Arten von Arbeitsdaten die tatsächliche Bearbeitungsgeschwindigkeit und die Entladungsspannung sind.

**11.** Überwachungsvorrichtung in Kombination mit einer elektrischen Entladungsmaschine nach einem der vorhergehenden Ansprüche, wobei in der Anzeige (c) die verschiedenen Formen des Bearbeitungswegs eine Gerade, eine scharfe Ecke und eine gewölbte Ecke sind.

## Revendications

**1.** Appareil de surveillance en combinaison avec une machine d'usinage par étincelage et comprenant: un moyen de mémoire (32) conçu pour mémoriser, à chacun des moments donnés, une mesure surveillée des données de travail qui indique un état présent de l'usinage par étincelage; un moyen d'affichage (50, 51) conçu pour afficher l'état en cours de l'usinage par étincelage au moyen d'une mesure surveillée extraite dudit moyen de mémoire (32); et un moyen de transformation (30) conçu pour transformer les mesures surveillées en représentations visuelles à des fins d'affichage sur le moyen d'affichage (50, 51), le moyen d'affichage (50, 51) pouvant être mis en service pour afficher des représentations visuelles de différents types desdites mesures surveillées;

caractérisé en ce que l'appareil de surveillance est conçu pour fournir les affichages suivants des représentations visuelles de la mesure surveillée:

(a) des mesures surveillées de données de travail à leurs endroits correspondants sur une voie d'usinage, l'affichage fournissant une représentation en trois dimensions,
(b) des mesures surveillées de différents types dans un processus d'usinage, dans lesquelles on visualise la relation entre les différents types de données de travail dans le processus d'usinage; et
(c) des mesures surveillées de données de travail à différentes configurations de la voie d'usinage au fur et à mesure que le processus d'usinage progresse, par lesquelles on visualise la variation des données de travail auxdites configurations différentes.

**2.** Appareil de surveillance en combinaison avec une machine d'étincelage par usinage selon la revendication 1, dans lequel lesdits temps donnés comprennent des temps d'échantillonnage.

**3.** Appareil de surveillance en combinaison avec une machine d'étincelage par usinage selon la revendication 1 ou 2, dans lequel plusieurs mesures surveillées affichées comprennent un type spécifique de ces dernières à travers différents processus d'usinage par étincelage.

**4.** Appareil de surveillance en combinaison avec une machine d'étincelage par usinage selon la revendication 1, 2 ou 3, dans lequel plusieurs mesures surveillées affichées comprennent des types discrets de ces dernières dans un seul processus d'usinage par étincelage.

**5.** Appareil de surveillance en combinaison avec une machine d'étincelage par usinage selon la revendication 3 ou 4 lorsqu'elle dépend de la revendication 3, dans lequel un desdits différents processus d'usinage par étincelage est désigné, dans lequel on obtient un produit exempt de défauts.

**6.** Appareil de surveillance en combinaison avec une machine d'étincelage par usinage selon l'une quelconque des revendications précédentes, dans lequel le moyen de transformation (30) est capable de comparer des mesures surveillées dans un premier processus d'usinage par étincelage avec celles dans un autre processus de ce type.

**7.** Appareil de surveillance en combinaison avec une machine d'étincelage par usinage selon la revendication 6 lorsqu'elle dépend de la revendication 5, dans lequel ledit premier processus d'usinage par étincelage est un processus dans lequel on obtient un produit exempt de défauts, et la comparaison donne lieu à une évaluation quant au fait de savoir si l'on obtient également un produit exempt de défauts dans ledit autre processus de ce type.

**8.** Appareil de surveillance en combinaison avec une machine d'étincelage par usinage selon l'une quelconque des revendications précédentes, dans lequel le moyen de transformation (30) est capable d'évaluer le résultat de l'usinage par étincelage en déterminant de manière sélective des endroits d'échantillonnage adjacents dans différents processus d'usinage par étincelage et en comparant les mesures surveillées à leur endroit d'échantillonnage respectif.

**9.** Appareil de surveillance en combinaison avec une machine d'étincelage par usinage selon l'une quelconque des revendications précédentes, dans lequel, dans ledit affichage (a), les données de travail représentent la vitesse d'usinage réelle.

**10.** Appareil de surveillance en combinaison avec une machine d'étincelage par usinage selon l'une quelconque des revendications précédentes, dans lequel, dans ledit affichage (b), les différents types de données de travail représentent la vitesse d'usinage réelle et la tension de décharge.

11. Appareil de surveillance en combinaison avec une machine d'étincelage par usinage selon l'une quelconque des revendications précédentes, dans lequel, dans ledit affichage (c), les différentes configurations de la voie d'usinage représentent une ligne droite, un coin à arête vive et un coin arqué.

F I G . 1

| | Time | Machining location | Actual machining speed | Discharge voltage | Off-time | Machining mode |
|---|---|---|---|---|---|---|
| 0 | 0 | $(X_0, Y_0)$ | $S_0$ | $DV_0$ | $T_0$ | $M_0$ |
| 1 | $\tau$ | $(X_1, Y_1)$ | $S_1$ | $DV_1$ | $T_1$ | $M_1$ |
| 2 | $2\tau$ | $(X_2, Y_2)$ | $S_2$ | $DV_2$ | $T_2$ | $M_2$ |
| ⋮ | ⋮ | ⋮ | ⋮ | ⋮ | ⋮ | ⋮ |
| i | $i\tau$ | $(X_i, Y_1)$ | $S_i$ | $DV_i$ | $T_i$ | $M_i$ |
| ⋮ | ⋮ | ⋮ | ⋮ | ⋮ | ⋮ | ⋮ |
| n | $n\tau$ | $(X_n, Y_1)$ | $S_n$ | $DV_n$ | $T_n$ | $M_n$ |

$\tau$ : Sampling time

# FIG. 2

Off-time T

On-time

Discharge voltage DV

$\tau$   $\tau$   $\tau$

Sampling time

# FIG. 3

Flow chart for acquisition
of monitored measurements.

Start

S1 | Read location (X,Y).

S2 | Read discharge voltage DV.

S3 | Read off-time T

S4 |
$$X_i \leftarrow X$$
$$Y_i \leftarrow Y$$
$$DV_i \leftarrow DV$$
$$T_i \leftarrow T$$

S5 | $$S_i = \{ (X_i - X_{i-1})^2 + (Y_i - Y_{i-1})^2 \}^{1/2} / \tau$$

S6 | $$i \leftarrow i + 1$$

End

## FIG. 4

Flow chart for displaying
a distribution of actual
machining speeds relative
to machining locations.

Start

S11 | $$i \leftarrow A$$

S12 | Convert $(X_i, Y_i, S_i)$ to two-dimensional point $(G_i, H_i)$.

S13 | Display $(G_i, H_i)$ in appropriate shape and color of $M_i$ mode.

S14 | Join $(G_{i-1}, H_{i-1})$ to $(G_i, H_i)$ by a straight line.

S15 | $$i \leftarrow i + 1$$

S16 | $i > B$  N

Y

End

## FIG. 5

16

Flow chart for displaying
a relation between discharge
voltage and actual
machining speed.

Start

S21  $i \leftarrow A$

S22  Convert $(DV_i, S_i)$ to
     two-dimensional point $(G_i, H_i)$.

S23  Display $(G_i, H_i)$ in appropriate
     shape and color of $M_i$ mode.

S24  $i \leftarrow i + 1$

S25  $i > B$  — N

Y

End

FIG. 6

Flow chart for displaying
a distribution of actual
machining speeds and discharge
voltages relative to machining
time.

Start

S31  $i \leftarrow A$

S32  Convert $(i\tau, S_i)$ to
     two-dimensional point $(G_i, H_i)$.

S33  Display $(G_i, H_i)$ in appropriate
     shape and color of $M_i$ mode.

S34  Join $(G_{i-1}, H_{i-1})$ to $(G_i, H_i)$
     by a straight line.

S35  $i \leftarrow i + 1$

S36  $i > B$  — N

Y

End

FIG. 7

Flow chart for displaying
a distribution of actual
machining speeds and
discharge voltages relative
to machining distance.

Start

S41   $i \leftarrow A$

S42   $D_i = \sum_{j=1}^{i} \{ (X_j - X_{j-1})^2 + (Y_j - Y_{j-1})^2 \}^{1/2}$

S43   Convert $(i, D_i)$ to
two-dimensional point $(G_i, H_i)$.

S44   Display $(G_i, H_i)$ in appropriate
shape and color of $M_i$ mode.

S45   Join $(G_{i-1}, H_{i-1})$ to $(G_i, H_i)$
by a straight line.

S46   $i \leftarrow i + 1$

S47   $i > B$   N

Y

End

FIG. 8

FIG.9

FIG.10

◯: Actual machining speed S
+: Discharge voltage DV

Machining time

Straight line | Sharp corner | Straight line | Arcuate corner

FIG.11

◯: Actual machining speed S
+: Discharge voltage DV

Machining distance D

Straight line | Sharp corner | Straight line | Arcuate corner

FIG.12

20

Start

S51 $i \leftarrow A,\ C \leftarrow 0,\ W \leftarrow 0$

S52 $E_i = \sum\limits_{k=1}^{i} \{ (U_k - U_{k-1})^2 + (V_k - V_{k-1})^2 \}^{1/2}$

S53 $j \leftarrow 1$

S54 $D_j = \sum\limits_{k=1}^{j} \{ (X_k - X_{k-1})^2 + (Y_k - Y_{k-1})^2 \}^{1/2}$

S55 $F_j = \{ (U_i - X_j)^2 + (V_i - Y_j)^2 \}^{1/2}$

S56 $|E_i - D_j| \leqq L$   N / Y

S57 $F_j \leqq M$   N / Y

S58 $j \leftarrow j + 1$

S59 $j > n$

S60 $W \leftarrow W + 1$

S61 $|R_i - S_j| \leqq K$   Y / N

S62 $C \leftarrow C + 1$

S63 $i \leftarrow i + 1$

S64 $i > B$   N / Y

S65 $W > Z$   Y / N

S67 $C > N$   N / Y

S68 Judge as defective.

S69 Judge as non-defective.

S66 No judgment

End

F I G . 1 3

FIG. 14

(a)

(b)

$E_A - D_1$ ———————— (c)

$E_A - D_2$ ———————— (d)

FIG.15

(a)

(b)

(c)

FIG. 16

X : Reference machining location (U,V)

O : Present machining location (X,Y)

⇨ : Sampling points not eligible for judgment.

FIG. 17